# NOUVEAU FASCICULE DE BREVET EUROPEEN

(11) **EP 3 917 806 B2**
(45) Date de publication et mention de la décision concernant l'opposition: **15.07.2026**
(45) Mention de la délivrance du brevet: 10.05.2023
(21) Numéro de dépôt: 20705436.2
(22) Date de dépôt: 24.01.2020
(51) Int. Cl.: B60R 13/04

(54) **VÉHICULE COMPRENANT UN SUPPORT D'ENJOLIVEUR DE VITRE ASSEMBLÉ PAR CLINCHAGE**
FAHRZEUG MIT FENSTERABDECKUNG MONTIERT DURCH KLINKEN
VEHICLE COMPRISING A WINDOW COVER ASSEMBLY ASSEMBLED BY CLINCHING

(30) Priorité: 29.01.2019 FR 1900780
(43) Date de publication de la demande: 08.12.2021
(73) Titulaire: Stellantis Auto SAS, 78300 Poissy (FR)
(72) Inventeur: MARTINA, Bruno, 25550 ISSANS (FR); LECLANCHER, David, 25420 Berche (FR)
(74) Mandataire: BCIP
(86) Numéro de dépôt international: PCT/FR2020/050102
(87) Numéro de publication internationale: WO 2020/157414

(56) Documents cités:
- CN-U- 208 325 395
- DE-A1- 3 124 973
- JP-A- 2006 015 781
- JP-A- 2008 254 525
- US-A1- 2007 163 089
- Zerlegebericht Opel Astra
- Zerlegebericht Mercedes A-Klasse
- Zerlegebericht Mercedes S-Klasse
- Eckold youtube-Video mit dem Titel „DFB 880 CONFIX-Fügen CONFIX-Joining“https://www.youtube.com/watch?v=2Hm2vScwp8M
- Awiszus, Bast, Dürr, Mayr (Hrsg.): Grundlagen der Fertigungstechnik. 6., aktualisierte Auflage (2016) Carl Hanser Verlag München
- Westkämper, Warnecke: Einführung in die Fertigungstechnik. 8. Aktualisierte und erweiterte Auflage (2010) Vieweg+Teubner Verlag

## Description

La présente invention concerne le domaine des véhicules, notamment des véhicules automobiles. L'invention concerne les véhicules équipés d'enjoliveurs de vitre, les ensembles comprenant des enjoliveurs de vitre et leur support ainsi que les procédés de montage de tels ensembles. L'invention est particulièrement adaptée aux enjoliveurs de vitres fixes de type pare-brise ou lunette arrière.

Les enjoliveurs de vitre sont destinés à équiper une zone de liaison entre une vitre et un élément de carrosserie. Par exemple, certains véhicules sont équipés d'enjoliveurs latéraux de pare-brise disposés au niveau des montants de baie. Les enjoliveurs latéraux de vitre ont une fonction esthétique en tant que pièce de finition entre la vitre et les éléments de structure du véhicule automobile. Ils ont également une fonction technique en empêchant l'endommagement de cette zone et une fonction aérodynamique.

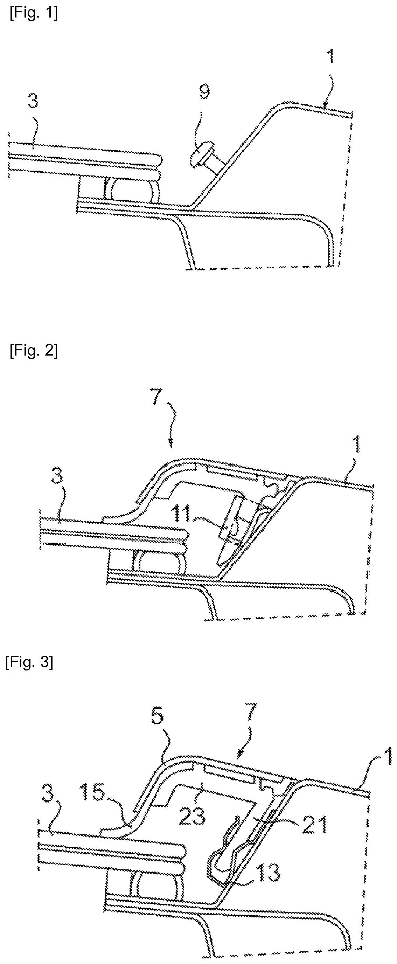

Les figures 1 et 2 illustrent les étapes d'un procédé classique de montage d'un enjoliveur 7 de vitre sur un élément 1 de structure de véhicule, par exemple destiné à un pare-brise 3. Dans une première étape représentée en figure 1 se déroulant pendant le ferrage du véhicule, des petits pions 9 avec un profil en T sont soudés sur l'élément 1 de structure. Par la suite, comme illustré en figure 2, des agrafes 11 sont montées sur lesdits pions et pour finir l'enjoliveur 7 est fixé sur lesdites agrafes 11, habituellement par clippage. Des exemples dans lesquels l'assemblage est réalisé en utilisant des pions et des agrafes sont donnés dans les documents US20040117951 et JP2006015781.

Malheureusement, l'étape de soudage des pions génère un certain nombre de défauts. En effet, le soudage de la totalité des pions soudés est contrôlé de manière qualitative. Les contrôles impliquent de vérifier que les pions ont bien été soudés, mais également leur tenue et leur position. Or, il s'avère que le positionnement des pions laisse parfois à désirer. Un mauvais positionnement des pions impacte directement la position d'un enjoliveur latéral et affecte donc la qualité du véhicule telle que perçue par l'utilisateur.

De plus, les pions utilisés sont de petites dimensions. De ce fait, ils sont susceptibles de tourner dans les gaines d'alimentation du dispositif de soudage et peuvent parfois être soudés à l'envers. Le défaut n'est détecté qu'au moment du montage, lors du clippage de l'agrafe. Ce défaut nécessite une retouche, mais une telle retouche est difficile car les opérateurs ont du mal à saisir les pions avec les gants, dont le port est obligatoire pour des raisons de sécurité. Il a été constaté que la pose en automatique des pions est une des principales sources de panne et d'apparition des défauts au niveau du ferrage.

Des procédés alternatifs existent pour la pose d'enjoliveurs de vitre. Par exemple, les supports peuvent être soudés sur l'élément de structure, par un soudage par point ou à l'arc. Mais cette technique d'assemblage oblige à avoir un élément de structure relativement volumineux pour le passage du moyen de soudage. Ceci affecte le style du véhicule, notamment lorsque la vitre est un pare-brise et l'élément de structure un montant de baie. Par ailleurs, un assemblage du support par soudage favorise l'apparition de points de corrosion puisqu'il détériore la couche anti-corrosion de la tôle formant l'élément de structure.

Il est également connu de fixer les supports par rivetage. Malheureusement, cette technique implique de poinçonner l'élément de structure, ce qui peut générer ultérieurement des problèmes d'étanchéité et de corrosion.

L'invention a pour objectif de répondre à au moins un des inconvénients et/ou problèmes rencontrés dans l'art antérieur en proposant un véhicule et un procédé de montage d'un tel véhicule dans lequel l'enjoliveur de vitre est assemblé de manière plus fiable en ce qu'il limite, voire élimine, le nombre d'apparitions de défauts lors de la production du véhicule. L'invention a également pour objectif de proposer un véhicule et un procédé de montage d'un tel véhicule dans lequel l'enjoliveur de vitre est assemblé de manière plus fiable en ce qu'il limite, voire élimine, le nombre d'apparitions de défauts postérieurement à la production du véhicule tels que des problèmes de corrosion ou d'étanchéité. Enfin, l'invention a pour objectif de proposer un véhicule et un procédé de montage d'un tel véhicule dans lequel l'enjoliveur de vitre est assemblé de manière qui n'affecte pas son style et qui puisse être mis en oeuvre sur des éléments de structure étroits. Enfin l'invention propose une installation pour la mise en oeuvre d'un tel procédé de montage.

A cet effet et selon un premier aspect, l'invention concerne un véhicule selon l'objet de la revendication 1.

De préférence, la vitre est une vitre fixe telle qu'un pare-brise ou une lunette arrière.

Comme on l'aura compris à la définition qui vient d'en être donnée, l'invention est remarquable en ce qu'en changeant le mode de fixation du support d'enjoliveur de vitre, l'invention s'affranchit des problèmes liés à la pose des pions dont le positionnement et l'orientation ont été identifiés comme une source importante de défauts. L'assemblage par clinchage est en outre avantageux en ce qu'il n'implique pas de changement ou de redimensionnement des éléments de structure et en ce qu'il ne va pas altérer le revêtement anti-corrosion de l'élément de structure sur lequel il est fixé. La tôle de l'élément de structure n'étant pas percée, la solution de l'invention ne génère pas de problèmes d'étanchéité. L'invention est en outre remarquable en ce qu'elle limite le nombre d'étapes dans le procédé d'assemblage du véhicule. En effet, dans l'art antérieur, la fixation de l'enjoliveur de vitre se déclinait en trois étapes : une étape de pose des pions, une étape de pose d'agrafes (i.e. support) sur les pions et une étape de fixation de l'enjoliveur de vitre sur les agrafes. L'invention élimine la pose d'une interface entre le support et l'élément de structure limitant donc les coûts associés à la production du véhicule.

De préférence, le ou les supports d'enjoliveur de vitre fixés sur l'élément de structure par clinchage comprennent au moins une interface de fixation coopérant avec un moyen de fixation complémentaire présenté par un enjoliveur de vitre.

Selon une mise en oeuvre préférée, l'élément de structure montre une section en oméga avec deux parois en vis-à-vis, le support d'enjoliveur étant fixé sur une des parois, et lesdites parois sont écartées l'une de l'autre selon une distance d comprise entre 30 à 40 mm. La section en oméga forme un espace de travail semi-fermé accessible uniquement par le côté. L'écartement entre les parois va définir le caractère volumineux ou non de l'élément de structure. On aura compris que l'invention est remarquable en ce qu'elle permet de fixer par clinchage un support d'enjoliveur sur un élément de structure étroit, c'est-à-dire dont l'écartement entre les parois, formant une section en oméga, est inférieur à 40 mm. Lorsque l'élément de structure est un montant de baie, cette section en oméga correspond au côté habitacle dans lequel sont disposés des éléments de renfort. Le support est fixé sur la face externe d'une des parois. L'opération de clinchage implique alors que la partie inférieure de la pince de clinchage, à savoir la partie portant la matrice, puisse pénétrer et se dégager de cet espace de travail semi-fermé de faibles dimensions. L'invention est donc également remarquable, comme vu plus loin, en ce qu'elle propose en outre un outil ou une installation comprenant cet outil, spécialement dimensionné à cet effet.

Selon une mise en oeuvre de l'invention, qu'au moins un enjoliveur de vitre est monté sur un support d'enjolveur de vitre montrant une longueur supérieure ou égale à 75 % de la longueur dudit enjoliveur et/ou en ce qu'un seul support d'enjoliveur de vitre est fixé sur ledit élément de structure ; de préférence, un seul enjoliveur de vitre est monté sur un seul support d'enjoliveur de vitre.

Selon un mode de réalisation, au moins un support d'enjoliveur de vitre se présente sous forme d'un profilé fixé sur l'élément de structure par au moins deux points de clinchage, et ledit support montre au moins une interface de fixation complémentaire à un moyen de fixation de l'enjoliveur de vitre, ladite interface de fixation étant agencée entre deux points de clinchage. De préférence, ledit support montre, selon sa longueur, une alternance de points de clinchage et d'interfaces de fixation. Ainsi, l'assemblage entre les deux pièces sera plus robuste.

Selon un mode de réalisation de l'invention, au moins un moyen de fixation de l'enjoliveur de vitre est un pied s'insérant dans l'interface de fixation du support d'enjoliveur de vitre, ladite interface de fixation est un moyen d'emboîtage élastique se présentant sous une forme de gouttière présentant deux ailes disposeés en regard l'une de l'autre et comprenant au moins un bossage intérieur s'étendant depuis une desdites ailes. De préférence, au moins une interface de fixation est venue de matière avec le support de sorte à ce que le support se présente sous forme d'une pièce unique présentant au moins une interface de fixation. Le montage de l'enjoliveur s'effectue donc « en force », en jouant sur l'effet ressort de la tôle. L'interface de fixation forme donc un moyen d'emboîtage élastique se déformant lors de l'introduction du pied porté par l'enjoliveur et ne présentant plus de contraintes une fois que les éléments sont emboîtés ensemble.

Selon une mise en oeuvre de l'invention, l'enjoliveur est un élément en au moins deux parties comprenant :
- au moins une partie souple formant au moins une lèvre d'étanchéité s'étendant sur un bord longitudinal de l'enjoliveur et, de préférence, s'étendant de part et d'autre de ses bords longitudinaux de manière à former deux lèvres d'étanchéité ; et
- au moins une partie rigide depuis laquelle s'étend au moins un moyen de fixation ;
et la ou les lèvres d'étanchéité de l'enjoliveur se placent en appui contre la vitre et l'élément de structure sur lequel l'enjoliveur est fixé par l'intermédiaire d'au moins un support.

Selon un mode de réalisation alternatif ou complémentaire de l'invention :
- la vitre est un pare-brise ; et/ou
- l'élément de structure est un montant de baie.

De préférence, l'enjoliveur de vitre est un enjoliveur latéral.

Selon un deuxième aspect, l'invention concerne un ensemble comprenant un enjoliveur de vitre et un support d'enjoliveur de vitre, ledit ensemble étant destiné à être monté sur un élément de structure d'un véhicule selon le premier aspect, ledit ensemble étant remarquable en ce que :
- le support d'enjoliveur de vitre se présente sous forme d'un profilé dimensionné pour s'étendre sur plus de 75 % de la longueur de l'enjoliveur de vitre auquel il est associé, le support comprenant au moins une interface de fixation ; et
- l'enjoliveur est un élément en au moins deux parties comprenant au moins une partie souple formant au moins une lèvre d'étanchéité s'étendant sur un bord longitudinal de l'enjoliveur et au moins une partie rigide depuis laquelle s'étend au moins un moyen de fixation configuré pour coopérer avec au moins une interface de fixation dudit support ; de préférence, le moyen de fixation est un moyen de clippage, tel qu'un pied.

De préférence, la partie souple s'étend de part et d'autre des bords longitudinaux de l'enjoliveur de manière à former deux lèvres d'étanchéité. Cette configuration est avantageuse en ce qu'elle permet d'assurer l'étanchéité du véhicule au niveau de l'interface vitre-caisse.

Selon un troisième aspect, l'invention concerne un procédé de montage selon la revendication 8.

Le clinchage, par opposition au soudage ou perçage, assure l'étanchéité et diminue le risque de corrosion de l'ensemble. Lors du soudage, du fait de la température élevée, la couche protectrice du zinc anti-corrosion présentée par l'élément de structure est détériorée. Cela engendre l'apparition de problèmes de corrosion.

De préférence, après l'étape d'assemblage dudit support audit élément de structure, le procédé de montage comprend en outre une étape de fixation de l'enjoliveur sur le support d'enjoliveur monté sur l'élément de structure. De préférence, l'étape de fixation est une étape de clippage.

Comme on l'aura compris, l'invention est remarquable en ce que le procédé est mis en oeuvre sur un élément de structure étroit. Ainsi, de manière préférentielle, l'élément de structure montre une section en oméga montrant deux parois en vis-à-vis, le support d'enjoliveur étant fixé sur une des parois, et lesdites parois sont écartées l'une de l'autre selon une distance d comprise entre 30 à 40 mm.

Selon un quatrième aspect, l'invention concerne une installation pour la production d'un véhicule selon le premier aspect, ladite installation comprenant une ligne de ferrage et est remarquable en ce qu'elle comprend au sein de ladite ligne de ferrage au moins une pince de clinchage pour la fixation d'un support d'enjoliveur de vitre sur un élément de structure. De préférence, ladite pince est configurée pour réaliser des points de clinchage d'un diamètre compris entre 3 et 8 mm. De préférence encore, ladite pince est dimensionnée pour présenter en partie inférieure un ensemble formé par une structure de pince, une cale de réglage et une matrice, l'ensemble montrant une hauteur inférieure à 30 mm ; de préférence comprise entre 22 et 27 mm et plus préférentiellement de l'ordre de 25 mm.

L'invention sera bien comprise et d'autres aspects et avantages apparaîtront clairement à la lecture de la description qui suit donnée en référence aux planches de dessins annexées sur lesquelles :
[Fig. 1] La figure 1 est une vue en coupe partielle d'un véhicule selon l'art antérieur montrant une vitre et un élément de structure sur lequel est monté un pion.
[Fig. 2] La figure 2 est une vue similaire à celle de la figure 1 montrant l'assemblage final dans lequel une agrafe coopère avec un enjoliveur ; pour des raisons de clarté de la figure le pion n'est pas représenté.
[Fig. 3] La figure 3 est une vue en coupe partielle d'un véhicule selon l'invention illustrant une vitre et un élément de structure sur lequel est monté un support d'enjoliveur, ledit support coopérant avec un enjoliveur.
[Fig. 4] La figure 4 représente un élément de structure selon l'invention sur lequel un support d'enjoliveur est destiné à être monté.
[Fig. 5] La figure 5 est une vue d'un montant de baie d'un véhicule sur lequel un support d'enjoliveur selon l'invention est monté et d'un enjoliveur destiné à être monté sur ledit support.
[Fig. 6] La figure 6 est une section d'un élément de structure selon l'invention assemblé à un support d'enjoliveur par clinchage.
[Fig. 7] La figure 7 est une vue partielle d'un support d'enjoliveur selon l'invention.

Dans la description qui suit, le terme « comprendre » est synonyme de « inclure » et n'est pas limitatif en ce qu'il autorise la présence d'autres étapes le procédé de montage ou d'autres éléments dans l'installation, le véhicule ou l'ensemble auquel il se rapporte. Il est entendu que le terme « comprendre » inclut les termes « consister en ». De même, les termes « inférieur », « supérieur », « avant », « arrière », « longitudinal » et « transversal » s'entendront par rapport à l'orientation générale du véhicule. « Inférieur » désignera une proximité au sol plus importante que « supérieur » selon l'axe vertical. Un plan transversal au véhicule est un plan formant un angle droit avec un axe longitudinal au véhicule et un axe vertical. Sur les différentes figures, les mêmes références désignent des éléments identiques ou similaires.

Les figures 1 et 2 ayant été décrites en partie introductive, on se référera à la figure 3 illustrant une vue en coupe d'un élément 1 de structure supportant une vitre 3, ledit élément 1 de structure présentant un enjoliveur 7 selon l'invention. Dans l'exemple de réalisation décrit, l'élément 1 de structure est un montant de baie, la vitre est un pare-brise et l'enjoliveur est un enjoliveur latéral de pare-brise. Le montant de baie est ici partiellement représenté. En effet, le montant de baie présente dans sa partie côté habitacle une section en oméga montrant deux parois en vis-à-vis. Le support d'enjoliveur est fixé sur une des parois et plus précisément sur la face externe d'une desdites parois. L'invention s'adresse préférentiellement aux éléments de structure étroits pour lesquels lesdites parois sont écartées l'une de l'autre selon une distance d comprise entre 30 à 40 mm. La section en oméga forme un espace de travail semi-fermé accessible uniquement par le côté.

Selon l'invention, au moins un des supports 13 d'enjoliveur de vitre est fixé sur l'élément 1 de structure par clinchage. Le clinchage est une technique connue d'assemblage de deux tôles métalliques dans laquelle lesdites tôles sont connectées par emboutissage entre un poinçon et une matrice. La déformation plastique se fait à froid et forme un point de clinchage facilement identifiable comme tel. Selon l'invention, ce point de clinchage peut être relativement petit en fonction de la pince utilisée pour le former et ne nécessite donc pas d'avoir à augmenter la taille de l'élément de structure qui peut rester étroit. A cet effet, l'invention mettra en oeuvre une pince de clinchage montrant des dimensions réduites en ce qu'elle présente en partie inférieure un ensemble formé par la structure de pince, la cale de réglage et la matrice montrant une hauteur inférieure à 30 mm ; de préférence comprise entre 22 et 27 mm et, plus préférentiellement, de l'ordre de 25 mm. Cet ensemble est destiné à pénétrer dans l'espace de travail semi-fermé formé au niveau de la section en oméga de l'élément de structure. Avantageusement, les dimensions de la pince sont choisies pour présenter au moins 5 mm de dégagement lorsqu'elle est insérée dans l'espace de travail au sein de la section en oméga de l'élément de structure. Par ailleurs, la pince est préférentiellement dimensionnée pour réaliser des points de clinchage d'un diamètre compris entre 3 et 8 mm.

On aura compris que la mise en oeuvre d'un assemblage par clinchage implique que le ou les supports 13 se présentent sous forme d'une tôle métallique, par exemple en acier ou en aluminium. Selon une mise en oeuvre préférée de l'invention, le ou les supports 13 se présentent sous forme d'un profilé métallique.

L'enjoliveur 7 selon l'invention est configuré pour se fixer sur ledit support 13 par le biais d'au moins un moyen de fixation 21 (visible en figure 3). Le support 13 présente, à cet effet, au moins une interface de fixation complémentaire. De manière avantageuse, la fixation de l'enjoliveur 7 de vitre sur son ou ses supports 13 se fait par clippage. Ainsi, au moins un moyen de fixation 21 de l'enjoliveur est un pied.

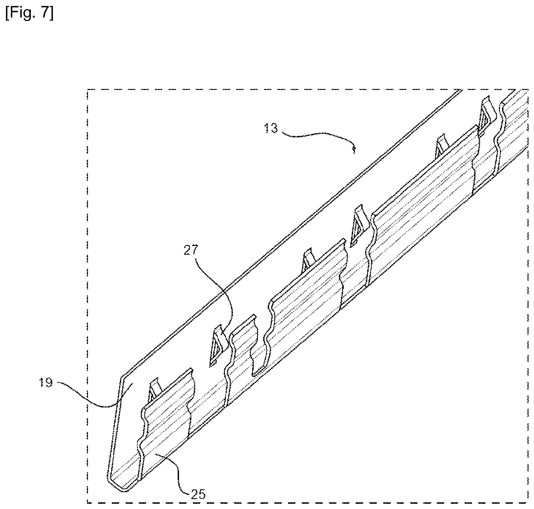

La figure 7 représente partiellement un exemple de réalisation d'un support 13 comprenant une pluralité d'interfaces de fixation 19. Dans notre exemple, les interfaces de fixation 19 se présentent sous une forme de gouttière en U, dans laquelle vient se ficher au moins un moyen de fixation 21 (visible en figure 3). Ainsi, ledit support 13 se présente sous forme d'un profilé en U dont une des parois 25 présente une denture de manière à montrer une alternance de gouttières formant une interface de fixation 19 et de parties vides destinées à laisser passer l'outil pour réaliser la fixation par clinchage sur l'autre paroi. De préférence, au moins une interface de fixation 19 présente au moins un bossage 27 interne, de façon à former une structure de retenue pour le pied de l'enjoliveur lorsqu'il est inséré dans ladite gouttière. Le pied est en effet inséré de force en jouant sur l'élasticité de la tôle montrée au niveau des parties pleines de la paroi 25 formant les gouttières. Ladite interface de fixation 19 du support 13 est d'emboîtage élastique coopérant avec un pied de l'enjoliveur, comlémentaire, pour une fixation par clippage de l'enjoliveur sur le support 13.

En retournant à la figure 3, selon une mise en oeuvre préférée de l'invention, l'enjoliveur 7 de vitre est une pièce ou un élément composé d'au moins deux parties dont une partie rigide 5 et une partie souple 15. La partie rigide 5 comprend une coque extérieure et le ou les moyens de fixation 21, et est préférentiellement composée en un matériau plastique ou composite, de préférence en un matériau thermoplastique ou thermodurcissable. La partie rigide 5 est formée par moulage. Avantageusement, elle présente en outre une interface de support 23 sur laquelle est disposée la partie souple 15. La partie rigide 5 présente alors un profil en équerre. Elle peut être faite de deux pièces assemblées.

La partie rigide 5 peut être confectionnée en matériau plastique choisi dans le groupe comprenant les acrylonitriles butadiène styrène (ABS), les acrylonitriles styrène acrylate (ASA), les acétates de cellulose (CA), les polypropylènes (PP), les polyamides (PA), les poly(téréphtalate de butylène) (PBT), les polycarbonates (PC), les polyéthylènes (PE), les polyphénylènes éther (PPE), les polychlorures de vinyle (PVC), les styrène-acrylonitriles (SAN) et leurs mélanges, tels que les mélanges polycarbonate - acrylonitrile butadiène styrène (ABS-PC).

La partie souple 15 peut être confectionnée en matériau élastomère, par exemple choisi parmi les terpolymères d'éthylène de propylène et d'un diène (EPDM), les élastomères thermoplastique (TPE), les copolymères styrène-butadiène (SBR), et les caoutchoucs. La partie souple 15 peut être assemblée à la partie rigide ou surmoulée sur cette dernière.

La partie souple 15, faisant office de joint d'étanchéité, s'étend sur toute la longueur de l'enjoliveur 7 de manière à se placer en appui à la fois contre la vitre 3 et l'élément 1 de structure sur lequel l'enjoliveur 7 est fixé par l'intermédiaire d'au moins un support 13 d'enjoliveur 7. Ladite partie souple 15 forme une lèvre d'étanchéité s'étendant sur un bord longitudinal de l'enjoliveur 7. De préférence, l'enjoliveur comprend deux lèvres d'étanchéités chacune s'étedant sur un de ses côtés longitudinaux de manière à assuer l'étanchéité à la fois avec la vitre d'un côté et avec l'élément de structure de l'autre côté. Dans un mode de réalisation, ladite partie souple 15 est disposée intercalée en partie entre la coque extérieure de la partie rigide 5 et l'interface de support 23.

Préférentiellement, la partie rigide 5 présente une pluralité de moyens de fixation 21. L'enjoliveur 7 de vitre présente un nombre de moyens de fixation 21 supérieur ou égal au nombre d'interfaces de fixation 19 du ou des supports 13 d'enjoliveur de vitre sur lequel ou lesquels il est monté. En effet, il est possible que deux moyens de fixations 21 coopèrent avec une même interface de fixation 19. Néanmoins, préférentiellement, une interface de fixation 19 coopère avec un seul moyen de fixation 21, si bien que le nombre de moyen de fixation 21 de l'enjoliveur 7 de vitre est égal au nombre d'interfaces de fixation 19 du ou des supports 13 d'enjoliveurs de vitre sur lequel ou lesquels il est monté.

Selon une mise en oeuvre de l'invention, le support 13 d'enjoliveur de vitre se présente sous forme d'un profilé dimensionné pour s'étendre sur plus de 75 % de la longueur de l'enjoliveur de vitre auquel il est associé. En d'autres termes, au moins un enjoliveur 7 de vitre est monté sur un support 13 d'enjolveur de vitre montrant une longueur supérieure ou égale à 75 % de la longueur dudit enjoliveur de vitre ; de préférence, supérieure ou égale à 85% de la longueur dudit enjoliveur 7 de vitre et, encore plus préférentiellement, égal à la longueur dudit enjoliveur 7 de vitre. De préférence, un enjoliveur de vitre 7 est fixé à un seul support 13 d'enjoliveur de vitre.

Afin d'assurer un bon assemblage entre l'élément de structure 1 et le support 13, au moins deux points de clinchage 17 sont réalisés. Cette configuration permet d'éviter le déplacement de l'enjoliveur après sa fixation sur le support. Avantageusement, au moins une interface de fixation 19 est agencée entre deux points de clinchage, de préférence une seule. Selon une mise en oeuvre préférentielle, le support 13 montre une alternance de points de clinchage 17 et d'interfaces de fixation 19 selon sa longueur. L'espacement desdits points de clinchage et des interfaces de fixation assure une coopération plus solide entre les trois éléments, à savoir l'enjoliveur 7, le support 13 d'enjoliveur et l'élément de structure 1.

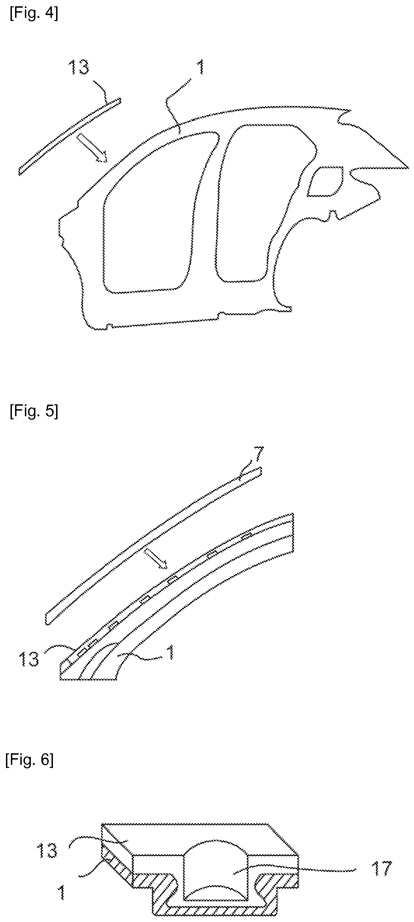

Les figures 4 et 5 illustrent les différentes étapes du procédé de montage selon l'invention. La figure 4 montre, lors l'étape de ferrage, l'assemblage du support 13 d'enjoliveur sur un montant de baie 1 d'un côté de caisse. L'assemblage des deux éléments s'effectue par clinchage à l'aide d'une pince de clinchage (non représentée) dimensionnée pour effectuer des points de clinchage de taille très réduite. Un point de clinchage 17 est illustré en figure 6. La pince de clinchage spécifique réalise au moins deux points de clinchage 17 par support 13, de préférence au moins quatre points de clinchage, et, de préférence encore, huit points de clinchage. Le diamètre d'un point de clinchage est compris entre 3 à 8 mm, de préférence entre 4 et 7 mm et, de préférence encore, il est de 6 mm. L'homme du métier adaptera sans peine le nombre de points de clinchage à effectuer ainsi que leurs diamètres selon ses besoins.

Dans la ligne de ferrage, ladite pince est avantageusement installée sur le même robot que celui permettant la mise en place et le maintien du support d'enjoliveur sur l'élément de structure.

Dans le contexte de l'invention, une pince de clinchage fonctionne selon la manière suivante. D'abord, les tôles de l'élement de structure 1 et du support 13 d'enjoliveur sont serrées ensemble de manière à bloquer leur positionnement l'une par rapport à l'autre. Sous la poussée du poinçon, des contraintes de type cisaillement produisent la déformation plastique entre le poinçon et la matrice. Ensuite, le fond des tôles emboîtées l'une dans l'autre se déforme en compression lorsque le poinçon vient buter contre le fond de la matrice. Cette compression va produire l'élargissement de la tôle de support 13 au niveau du point assurant ainsi le verrouillage avec la tôle de l'élément 1 de structure. L'écoulement du métal qui assure le verrouillage se produit parallèlement au plan de la tôle.

La figure 5 montre l'étape de fixation de l'enjoliveur 7 sur un support 13 assemblé par clinchage à l'élément 1 de structure. Les moyens de fixation 21 (visibles in figure 3) présents sur la partie rigide 5 de l'enjoliveur 7 venant en regard du support 13 coopèrent avec les interfaces de fixation 19 présentées par ledit support 13. De préférence, l'enjoliveur 7 comprend au moins deux moyens de fixation et le support 13 comprend au moins deux interfaces de fixation.

Dans l'art antérieur, l'emploi des pions, tel que les petits pions Tucker au ferrage, engendrait un nombre important d'inconvénients. De fait de leurs petites tailles, les pions de type Tucker risquaient d'être soudés à l'envers ou dans une mauvaise position, ce qu'entraînait la nécessité de faire de retouches, donc de rallonger le temps de production. Selon l'invention, le temps de production est diminué car les étapes de soudage et de montage d'agrafes sur les pions sont supprimées. En moyenne, grâce à l'invention, le temps de production diminue d'environ 30 secondes par véhicule.

Ainsi, les étapes du procédé selon l'invention comprennent une étape de positionnement du support 13 d'enjoliveur sur l'élément 1 de structure par un robot. Le côté de caisse est chargé dans un outil de mise en géométrie par un robot. Le support d'enjoliveur est mis en place sur ledit côté de caisse par un même robot et maintenu par l'outil mécanique de mise en géométrie pour le positionner précisément et le maintenir. Le même robot de chargement de la pièce réalise, de préférence, huit points de clinchage avec ladite pince spécifique.

De manière alternative, le positionnement peut s'effectuer manuellement.

L'assemblage par clinchage proposé vient donc s'intégrer dans un outillage existant, contrairement à l'assemblage par soudage des pions, tels que des goujons de type Tucker qui, pour des problèmes de retour de masse, nécessite un poste dédié. Ainsi, le procédé selon l'invention permet d'éviter l'utilisation d'un poste supplémentaire. Le positionnement du support est réalisé sur un dispositif mécanique réglable, permettant à ce que la géométrie soit mieux maîtrisée.

L'installation pour la production d'un véhicule selon l'invention comprend une ligne de ferrage au sein de laquelle au moins une pince de clinchage est employée pour la fixation d'un support d'enjoliveur de parebrise sur un élément de structure, ladite pince comprenant un poinçon, une matrice et une cale de réglage. La pince est dimensionnée pour réaliser des points de clinchage d'un diamètre compris entre 3 et 8 mm et pour accéder dans un espace de travail inférieur à 30 mm. Lors du clinchage, la pince est apte à s'insérer depuis l'un des côtés latéraux d'un côté de caisse dans un espace de travail très réduit. Cette accessibilité latérale est donnée par le fait que la matrice de la pince est semi-fermée. 1

## Revendications

1. Véhicule comprenant au moins un élément (1) de structure supportant une vitre (3), au moins un enjoliveur (7) de vitre et au moins un support (13) d'enjoliveur de vitre fixé sur ledit élément (1) de structure et sur lequel est monté un enjoliveur (7) de vitre, le véhicule étant **caractérisé en ce qu'**au moins un desdits supports (13) d'enjoliveur de vitre est fixé sur l'élément (1) de structure par clinchage de sorte que les tôles de l'élément de structure (1) et du support (13) d'enjoliveur sont serrées ensemble de manière à bloquer leur positionnement l'une par rapport à l'autre, et que, sous la poussée d'un poinçon au niveau d'un point de clinchage, des contraintes de type cisaillement produisent une déformation plastique entre le poinçon et une matrice, puis le fond des tôles emboîtées l'une dans l'autre se déforme en compression lorsque le poinçon vient buter contre le fond de la matrice pour produire un élargissement de la tôle de support au niveau du point de clinchage assurant ainsi le verrouillage avec la tôle de l'élément de structure, l'écoulement du métal qui assure le verrouillage se produisant parallèlement au plan de la tôle.

2. Véhicule selon la revendication 1, **caractérisé en ce que** le ou les supports (13) d'enjoliveur de vitre fixés sur l'élément (1) de structure par clinchage comprennent au moins une interface de fixation (19) coopérant avec un moyen de fixation (21) complémentaire présenté par un enjoliveur (7) de vitre.

3. Véhicule selon l'une des revendications 1 ou 2, **caractérisé en ce qu'**au moins un enjoliveur (7) de vitre est monté sur un support (13) d'enjoliveurs de vitre montrant une longueur supérieure ou égale à 75 % de la longueur dudit enjoliveur (7) et/ou **en ce qu'**un seul support (13) d'enjoliveur de vitre est fixé sur ledit élément (1) de structure.

4. Véhicule selon l'une des revendications 2 ou 3, **caractérisé en ce qu'**au moins un support (13) d'enjoliveur de vitre se présente sous forme d'un profilé fixé sur l'élément (1) de structure par au moins deux points de clinchage (17), et ledit support (13) montre au moins une interface de fixation (19) complémentaire à un moyen de fixation (21) de l'enjoliveur (7) de vitre, ladite interface de fixation (19) étant agencée entre deux points de clinchage (17) ; de préférence, ledit support (13) montre, selon sa longueur, une alternance de points de clinchage (17) et d'interfaces de fixation (19).

5. Véhicule selon l'une des revendications 2 à 4 **caractérisé en ce qu'**au moins un moyen de fixation (21) de l'enjoliveur (7) de vitre est un pied s'insérant dans une interface de fixation (19) du support (13) d'enjoliveur de vitre, ladite interface de fixation est un moyen d'emboîtage élastique se présentant sous une forme de gouttière (25) présentant deux ailes disposées en regard l'une de l'autre et comprenant au moins un bossage (27) intérieur s'étendant depuis une desdites ailes ; de préférence, au moins une interface de fixation (19) est venue de matière avec le support (13) de sorte à ce que le support (13) se présente sous forme d'une pièce unique présentant au moins une interface de fixation (19).

6. Véhicule (1) selon l'une des revendications 2 à 5 **caractérisé en ce que** l'enjoliveur (7) de vitre est un élément en au moins deux parties comprenant :
- au moins une partie souple (15) formant au moins une lèvre d'étanchéité s'étendant sur un bord longitudinal de l'enjoliveur (7) et, de préférence, s'étendant de part et d'autre de ses bords longitudinaux de manière à former deux lèvres d'étanchéité ; et
- au moins une partie rigide (5) depuis laquelle s'étend au moins un moyen de fixation (21);
et **en ce que** la ou les lèvres d'étanchéité (15) de l'enjoliveur (7) se placent en appui contre la vitre (3) et l'élément (1) de structure sur lequel l'enjoliveur (7) est fixé par l'intermédiaire d'au moins un support (13).

7. Véhicule selon l'une des revendications 1 à 6 **caractérisé en ce que** la vitre (3) est un pare-brise et/ou **en ce que** l'élément (1) de structure est un montant de baie.

8. Procédé de montage d'un véhicule selon l'une des revendications 1 à 7, le véhicule comprenant au moins un élément (1) de structure supportant une vitre (3), au moins un enjoliveur (7) de vitre et au moins un support (13) d'enjoliveur de vitre, le procédé comprenant :
- une étape de positionnement du support (13) d'enjoliveur de vitre sur l'élément (1) de structure, et
- une étape d'assemblage dudit support (13) audit élément (1) de structure ;
le procédé étant **caractérisé en ce que** l'étape d'assemblage entre le support (13) d'enjoliveur de vitre et l'élément (1) de structure s'effectue par clinchage de sorte que les tôles de l'élément de structure (1) et du support (13) d'enjoliveur sont serrées ensemble de manière à bloquer leur positionnement l'une par rapport à l'autre, et que, sous la poussée d'un poinçon au niveau d'un point de clinchage, des contraintes de type cisaillement produisent une déformation plastique entre le poinçon et une matrice, puis le fond des tôles amboîtées l'une dans l'autre se déforme en compression lorsque le poinçon vient buter contre le fond de la matrice pour produire un élargissement de la tôle de support au niveau du point de clinchage assurant ainsi le verrouillage avec la tôle de l'élément de structure, l'écoulement du métal qui assure le verrouillage se produisant parallèlement au plan de la tôle ; de préférence, les deux pièces sont assemblées par au moins deux points de clinchage (17).

9. Procédé de montage selon la revendication 8, **caractérisé en ce qu'**après l'étape d'assemblage dudit support (13) audit élément (1) de structure, il comprend une étape de fixation de l'enjoliveur (7) sur le support (13) d'enjoliveur de vitre ; de préférence, l'étape de fixation est une étape de clippage.

## Patentansprüche

1. Fahrzeug, das mindestens ein Strukturelement (1), das eine Scheibe (3) trägt, mindestens eine Fensterabdeckung (7) und mindestens eine Fensterabdeckungshalterung (13) aufweist, die an dem Strukturelement (1) befestigt ist und an der eine Fensterabdeckung (7) angebracht ist, wobei das Fahrzeug **dadurch gekennzeichnet ist, dass** mindestens eine der Fensterabdeckungshalterungen (13) an dem Strukturelement (1) durch Klinken befestigt ist, sodass die Bleche des Strukturelements (1) und der Halterung (13) eine Zierkappe so zusammengeklemmt ist, dass ihre Positionierung relativ zueinander blockiert ist, und dass unter dem Druck eines Stempels an einer Verrastungsstelle scherartige Spannungen eine plastische Verformung zwischen dem Stempel und einer Matrize hervorrufen und sich dann der Boden der ineinandergesteckten Bleche verformt, wenn der Stempel gegen den Boden der Matrize stößt, um eine Erweiterung des Trägerblechs an der Verrastungsstelle zu erzeugen, wodurch die Verriegelung mit dem Blech des Strukturelements sichergestellt wird, wobei der Metallfluss die Verriegelung parallel zur Blechebene.

2. Fahrzeug nach Anspruch 1, **dadurch gekennzeichnet, dass** der oder die an dem Strukturelement (1) durch Klinken befestigten Scheibenabdeckungsträger (13) mindestens eine Befestigungsschnittstelle (19) aufweisen, die mit einem komplementären Befestigungsmittel (21) zusammenwirkt, das von einer Scheibenabdeckung (7) gebildet ist.

3. Fahrzeug nach einem der Ansprüche 1 oder 2, **dadurch gekennzeichnet, dass** mindestens eine Fensterabdeckung (7) auf einem Träger (13) für Fensterabdeckungen montiert ist, der eine Länge von 75% oder mehr der Länge der genannten Abdeckung (7) aufweist, und/oder dass nur ein Träger (13) für Fensterabdeckungen an dem genannten Strukturelement (1) befestigt ist.

4. Fahrzeug nach einem der Ansprüche 2 oder 3, **dadurch gekennzeichnet, dass** wenigstens ein Träger (13) für die Zierkappe der Scheibe die Form eines Profils hat, das an dem Strukturelement (1) durch wenigstens zwei Rastpunkte (17) befestigt ist, und dass der Träger (13) wenigstens eine Befestigungsschnittstelle (19) aufweist, die zu einem Befestigungsmittel (21) der Zierkappe (7) der Scheibe komplementär ist, wobei die Befestigungsschnittstelle (19) zwischen zwei Rastpunkten (17) der Scheibe angeordnet ist; Vorzugsweise weist die Halterung (13) je nach ihrer Länge abwechselnd Rastpunkte (17) und Befestigungsschnittstellen (19) auf.

5. Fahrzeug nach einem der Ansprüche 2 bis 4, **dadurch gekennzeichnet, dass** mindestens ein Befestigungsmittel (21) der Zierkappe (7) der Scheibe ein Fuß ist, der in eine Befestigungsschnittstelle (19) des Trägers (13) der Zierkappe der Scheibe einpasst, wobei die Befestigungsschnittstelle ein elastisches Einsteckmittel ist, das in Form einer Rinne (25) vorliegt, die zwei Flügel aufweist, die einander gegenüberliegend angeordnet sind und mindestens einen inneren Vorsprung (27) aufweisen, der sich von einem der Flügel erstreckt Vorzugsweise ist wenigstens eine Befestigungsschnittstelle (19) derart einstückig mit dem Träger (13) ausgebildet, dass der Träger (13) als ein einziges Bauteil ausgebildet ist, das wenigstens eine Befestigungsschnittstelle (19) aufweist.

6. Fahrzeug (1) nach einem der Ansprüche 2 bis 5, **dadurch gekennzeichnet, dass** die Zierkappe (7) der Scheibe ein Element aus mindestens zwei Teilen ist, das Folgendes umfasst:
- mindestens ein biegsames Teil (15), das mindestens eine Dichtlippe bildet, die sich über einen Längsrand der Zierkappe (7) erstreckt und vorzugsweise beiderseits ihrer Längsränder verläuft, sodass zwei Dichtlippen gebildet werden; und
- mindestens ein starres Teil (5), von dem sich mindestens ein Befestigungsmittel (21) erstreckt;
und **dadurch gekennzeichnet, dass** sich die Dichtungslippe oder die Dichtungslippen (15) der Zierkappe (7) an der Scheibe (3) und dem Strukturelement (1) abstützen, an dem die Zierkappe (7) über mindestens einen Träger (13) befestigt ist.

7. Fahrzeug nach einem der Ansprüche 1 bis 6, **dadurch gekennzeichnet, dass** die Scheibe (3) eine Windschutzscheibe ist und/oder dass das Strukturelement (1) ein Gestellständer ist.

8. Verfahren zur Montage eines Fahrzeugs nach einem der Ansprüche 1 bis 7, wobei das Fahrzeug mindestens ein Strukturelement (1), das eine Scheibe (3) trägt, mindestens eine Fensterabdeckung (7) und mindestens einen Fensterabdeckungsträger (13) umfasst, wobei das Verfahren umfasst:
- einen Schritt zur Positionierung des Fensterzaunhalters (13) auf dem Strukturelement (1) und
- einen Schritt des Zusammenbaus des Trägers (13) mit dem Strukturelement (1);
Das Verfahren ist **dadurch gekennzeichnet, dass** der Schritt des Zusammenfügens zwischen dem Halter (13) für die Fensterabdeckung und dem Bauteil (1) durch Klinken erfolgt, sodass die Bleche des Bauteils (1) und des Halters (13) für die Abdeckung so zusammengeklemmt werden, dass ihre Positionierung relativ zueinander blockiert wird, und dass unter dem Druck eines Stempels an einem Keilpunkt scherartige Spannungen eine plastische Verformung zwischen dem Stempel und einer Matrize und dann dem Boden der ineinandergesteckten Bleche erzeugen Ineinander greifen verformt sich unter Druck, wenn der Stempel gegen den Boden der Matrize stößt, um eine Verbreiterung des Trägerblechs an der Verrastungsstelle zu erzeugen, wodurch die Verrastung mit dem Blech des Bauelements sichergestellt wird, wobei der Fluss des die Verrastung sichernden Metalls parallel zur Blechebene erfolgt; vorzugsweise werden die beiden Teile durch mindestens zwei Verrastungsstellen (17) verbunden.

9. Montageverfahren nach Anspruch 8, **dadurch gekennzeichnet, dass** es nach dem Schritt des Zusammenfügens des Trägers (13) mit dem Strukturelement (1) einen Schritt des Anbringens der Zierkappe (7) an dem Fensterzierblendenträger (13) umfasst; vorzugsweise ist der Schritt des Anbringens ein Clipschritt

## Claims

1. Vehicle comprising at least one structural item (1) supporting a window (3), at least one window trim (7) and at least one window trim support (13) fixed to said structural item (1) and on which a window trim (7) is mounted, the vehicle being **characterised in that** at least one of said window trim supports (13) is fixed to the structural item (1) by clinching
so that the sheets of the structural item (1) and of the trim support (13) are clamped together so as to block their positioning from one report to the other, and that, under the thrust of a punch at the level of a clinching point, constraints of the plastic type produce a shear punch and a die, then the bottom of the sheets fitted one into the other is deformed in
compression when the punch abuts against the bottom of the die to produce an enlargement of the support sheet to the level of the clinching point thus ensuring the locking with the sheet of the structural item, the flow of the metal which ensures the locking
occurring parallel to the drawing of the sheet.

2. Vehicle according to Claim 1, wherein the window trim support or supports (13) fixed to the structural item (1) by clinching comprise at least one fixing interface (19) cooperating with a complementary fixing means (21) presented by a window trim (7).

3. Vehicle according to one of Claims 1 or 2, wherein at least one window trim (7) is mounted on a window trim support (13) having a length greater than or equal to 75% of the length of said window trim (7) and/or wherein a single window trim support (13) is fixed to
said structural item (1).

4. Vehicle according to one of Claims 2 or 3, **characterised in that** at least one window trim support (13) is in the form of a profile fastened to the structural item (1) by at least two clinching points (17), and said support (13) shows at least one fastening interface
(19) complementary to a fastening means (21) of the window trim (7), said fastening interface (19) being arranged between two clinching points (17); preferably, said support (13) shows, along its length, an alternation of clinching points (17) and fastening interfaces
(19).

5. Vehicle according to one of Claims 2 to 4, **characterised in that** at least one fastening means (21) of the window trim (7) is a foot inserted into a fastening interface (19) of the window trim support (13), said fastening interface is an elastic nesting means in the shape of a gutter (25) having two wings arranged facing each other and comprising at least one internal boss (27) extending from one of said wings; preferably, at least one fastening interface (19) is integral with the support (13) so that the support (13) is in the shape of a
single component having at least one fastening interface (19).

6. Vehicle (1) according to one of Claims 2 to 5, **characterised in that** the window
trim (7) is an item in at least two parts comprising:
- at least one flexible part (15) forming at least one sealing lip extending over a longitudinal edge of the trim (7) and, preferably, extending on either side of its longitudinal edges so as to form two sealing lips; and
- at least one rigid part (5) from which at least one fixing means (21) extends;
and **in that** the sealing lip or lips (15) of the trim (7) are placed in abutment against the window (3) and the structural item (1) on which the trim (7) is fixed by means of at least one
support (13).

7. Vehicle according to one of Claims 1 to 6, **characterised in that** the window (3) is a
windscreen and/or **in that** the structural item (1) is a bay post.

8. Method of assembly line of a vehicle according to one of Claims 1 to 7, the vehicle comprising at least one structural item (1) supporting a window (3), at least one window trim (7) and at least one window trim support (13), the method comprising:
- step of positioning the window trim support (13) on the structural item (1), and step of assembling said support (13) to said structural item (1);
the method being **characterised in that** the step of assembling between the window trim support (13) and the structural item (1) is carried out by clinching so that the sheets of the structural item (1) and of the trim support (13) are clamped together so as to block their positioning one by report with the other, and that under the thrust of a punch at the level of a clinching point, constraints of the shear type produce a plastic deformation between the
punch and a die, then the bottom of the sheets fitted into one another deforms in
compression when the punch abuts against the bottom of the die to produce an enlargement of the support sheet at the level of the clinching point thus ensuring locking with the sheet of the structural item, the flow occurring parallel to the locking drawing of the sheet; preferably, the two components are assembled by at least two clinching points (17).

9. assembly line method according to claim 8, wherein after the step of assembling said support (13) to said structural item (1), it comprises a step of fixing the trim (7) to the window trim support (13); preferably, the fixing step is a clipping step
